# EUROPÄISCHE PATENTSCHRIFT

(11) **EP 1 815 902 B1**
(45) Veröffentlichungstag und Bekanntmachung des Hinweises auf die Patenterteilung: **28.04.2010**
(21) Anmeldenummer: 06024856.4
(22) Anmeldetag: 30.11.2006
(51) Int. Cl.: B01D 53/18, B01D 53/78, B01D 53/84, A01K 1/00, F28D 9/00, F28F 1/04, F28D 7/00

(54) **Abluftwäscher mit Wärmetauscher für einen Tierstall**
Exhaust air scrubber with heat exchanger for an animal stable
Epurateur d'air vicié doté d'un échangeur thermique pour une écurie

(30) Priorität: 19.01.2006 DE 102006002719
(43) Veröffentlichungstag der Anmeldung: 08.08.2007
(73) Patentinhaber: Schönhammer, Martin, 84152 Mengkofen (DE)
(72) Erfinder: Schönhammer, Martin, 84152 Mengkofen (DE)
(74) Vertreter: Appelt, Christian W.

(56) Entgegenhaltungen:
- EP-A1- 0 283 718
- WO-A-95/11418
- DE-A1- 4 112 983
- GB-A- 679 131
- US-A- 5 915 620

## Beschreibung

Die Erfindung bezieht sich auf einen Bio-Abluftwäscher für einen Tierstall nach Anspruch 1.

Biologische Abluftwäscher, bei denen die geruchsbehaftete Stall-Abluft über einen biologischen Rasen streicht, der die vom rezirkulierten Waschwasser eingefangenen Absorbate abbaut, sind an sich bekannt (z. B. DE 4112983 C2; VDI-Richtlinie 3478 von 1985). Desgleichen sind Gegenstromwärmetauscher für die Stallbelüftung bekannt (z. B. EP 0 283 718 B1), auch solche, für deren Abluftkanäle eine Wasserdurchschwemmung zur Kanalreinigung vorgesehen ist (US 5 915 620 A). Während der Abluftwäscher keine Zuluftkanäle besitzt, hingegen an seiner Unterseite eine Auffangwanne für das umlaufende Rieselwasser aufweist, muß der Wärmetauscher sowohl Abluftkanäle als auch Zuluftkanäle in enger Berührung zueinander enthalten. Es ist auch bereits vorgeschlagen worden , solche Installationen in Reihe zu schalten und dadurch die Stallluft sowohl zu desodorieren als auch ihren Wärmeinhalt zu einem gewissen Prozentsatz wiederzugewinnen (DE 4112983 C2). In anderem Zusammenhang, nämlich zur Kühlung von in einem Reaktionsgefäß reagierenden Gase und Flüssigkeiten, sind auch Reaktoren mit in das Reaktionsgefäß integrierten, von einem Wärmetransportmittel durchflossenen Kühlrohren bekannt (GB 679 131 A, WO 95/11418 A).

Für den Gegenstromwärmetauscher ist die jahreszeitlich sehr unterschiedliche Luftdurchsatzrate zu beachten. Das Verhältnis der Winterabluft zur Sommerabluft kann 1 : 10 bis 1 : 20 betragen. Der Wärmetauscher hat deshalb für den Sommerbetrieb eine Abluft-Ableitung, die die großen Abluftmengen ganz oder teilweise am Wärmetauscherblock vorbeileitet. Im Wärmetauscherblock haben üblicherweise die Zuluftkanäle und die Abluftkanäle insgesamt gleichen Querschnitt, durch den Wärmetauscher fließt also ebenso viel Abluft ab, wie Zuluft zufließt. Die Bemessung ist auf den Winterbetrieb zugeschnitten. Da im Sommerbetrieb ein Vielfaches an Luft durchgewälzt wird, wird also der Wärmetauscher entweder komplett abgehängt oder die Abluft wird zu z.B. 80 % an ihm vorbeigeleitet. Am unteren und/oder am oberen Ende haben die üblichen Wärmetauscher eine Art Kanalbündelung, indem dort jeweils entweder die Zuluftkanäle oder die Abluftkanäle gebündelt und in vereinigtem Zustand seitlich weggeleitet werden.

Die Kanäle der üblichen Abluftwäscher, die nur Abluftkanäle sind, sind gemäß einer bekannten bewährten Konstruktion durch aneinander geheftete profilierte feste Folien gebildet, beispielsweise durch solche, bei denen aus der Folienebene zunächst entlang Zickzackbahnen tiefgezogene Nuten, die einen V-förmigen Querschnitt haben, gezogen sind, die von der anderen Seite her Rippen sind und ihrerseits wieder von den Seitenflächen abstehende runde Erweiterungen haben, so daß die Abluft gut verwirbelt wird und darin enthaltene Stäube wie z. B. Schwartenabriebstaub, und auch Gase an den feuchten, mit einem biologischen Rasen bedeckten Kanalinnenflächen eingefangen werden.

Die Hintereinanderschaltung des Abluftwäschers und des Wärmetauschers ergibt einen Raumbedarf, der vielerorts angesichts der Möglichkeit der vorhandenen Stallgebäude nicht realisierbar ist. Außerdem erweist sich der Einbau der Installationen mit ihren unterschiedlichen Zu- und Ableitungen für die Luftströme und das Wasser als komplexe und damit aufwendige Angelegenheit.

Durch die Erfindung sollen die Möglichkeiten der Abluftwäsche und der damit kombinierten Abwärmeausnützung räumlich und aufwandmäßig reduziert werden. Dies erfolgt gemäß der Erfindung dadurch, daß, ausgehend von einem Abluftwäscher der eingangs genannten Art, der wenigstens eine Wäscherabschnitt und wenigstens ein Abschnitt des Gegenstromwärmetauschers in integrierter Weise ein gemeinsames Bauteil bilden. Vorzugsweise bilden der gesamte Abluftwäscher und der gesamte Gegenstromwärmetauscher ein integriertes gemeinsames Bauteil.

Der Stalluftwäscher, der normalerweise nur Abluftkanäle hat, wird also um die Zuluftkanäle erweitert, beispielsweise so, daß eine der beiden Arten von Kanälen - Zuluftkanal oder Abluftkanal -, vorzugsweise die Abluftkanäle, aus seitlich geschlossenen Kanalleitungen besteht und die andere Art der Kanäle, vorzugsweise die Zuluftkanäle, aus den Zwischenräumen zwischen den Kanalleitungen besteht. Um die unterschiedlichen Erfordernisse des Luftdurchsatzes in den Griff zu bekommen, wird hierbei bevorzugt, daß die Summe der Querschnitte der Abluftkanäle zur Summe der Querschnitte der Zuluftkanäle in einem Verhältnis steht, das im Bereich von 7 : 1 bis 3 : 1 liegt, insbesondere daß das Verhältnis im Bereich 6 : 1 bis 4 : 1, vorzugsweise bei 5 : 1 liegt. Beim kombinierten Bauteil muß nämlich, im Vergleich zum Wärmetauscher nach dem Stand der Technik, das Querschnittsverhältnis so verändert werden, daß durch die Abluftkanäle die gesamte Abluft hinausgeschoben werden kann. Die Abluftkanäle, die zugleich die "Waschkanäle" sind, werden im Winter hinsichtlich ihres Querschnitts nur zu einem kleinen Prozentsatz ausgenützt, das herunterlaufende Waschwasser stellt aber zugleich einen Wärmetransporteur dar, der die Wärmetauscherwirkung verstärkt. Auch bei dem erfindungsgemäßen Gerät kann es allerdings in bestimmten Fällen nützlich sein, eine Umgehung für die Abluft vorzusehen. Dies ist bei Anlagen möglich, die in an sich bekannter Weise nur bei bestimmter Windrichtung einschalten, also wenn die Abluft auf eine Wohnsiedlung zugetrieben würde. Im anderen Fall geht die Abluft ungewaschen ins Freie.

Einerseits soll die Wärmetauscherfläche möglichst groß sein, wobei die Luftströme zur Verbesserung der Wärmetauscheffizienz in den Kanälen verwirbelt werden sollen, und andererseits ist es zweckmäßig, wenn in bekannter Weise die Abluftkanäle im Abluftwäscher eine Innenprofilierung aufweisen, also z. B. Rippen, insbesondere schraubenlinig umlaufende Rippen, Noppen und/oder dergleichen, aufweisen, auf denen sich der biologische Rasen ansetzen kann und die insbesondere den Staub aus der Abluft herausziehen. Außerdem werden teilweise auf bekannten Mustern aufbauende derartige Strukturen bevorzugt, daß die Abluftkanäle einen Zickzack-Verlauf haben und/oder daß sie eine Wendelung aufweisen, indem sie einen polygonalen Querschnitt haben und die Eckkanten der Abluftkanäle zumindest streckenweise eine um die Kanallängsachse umlaufende Verlaufskomponente haben. Insbesondere wird die an sich bekannte baulich besonders günstige Konstruktion bevorzugt, daß die Abluftkanäle aus Profilplatten bestehen, die parallel zueinander in im wesentlichen vertikaler Positionierung aneinanderliegend gehalten sind und deren Profile schräg abwärtslaufende Rinnen bilden. Für Kunststoffplatten muß das Kunststoffziehen möglich sein. Die Kanäle können aber auch aus Metall bestehen. Im Gegensatz zur bekannten Waschwasserauffangvorrichtung der Abluftwäscher, bei der das herunterlaufende Wasser unten in einer Wanne eingesammelt wird, in die es von der gesamten Unterfläche der Anlage hineintropft, wird die Konstruktion bevorzugt, daß, wenn die Abluftkanäle aus den geschlossenen Kanalleitungen bestehen, das Wasser durch die die Abluft heranführenden Zuluftkanäle seitlich abläuft und dann abgeleitet und beispielsweise zu einem Tank geführt werden kann, von dem aus es dann wieder aufgesprüht wird, z. B. indem die Wassersammelinstallation aus einem Kanalsystem besteht, das mit einer Zweigleitung an jedem der unteren Enden der Abluftkanäle angeschlossen ist, wodurch die Schwierigkeit vermieden ist, daß die am unteren Ende der kombinierten Einheit erforderlichen seitlichen Luftzuleit- oder -ableitkanäle das Auffangen des Waschwassers in einer Auffangwanne stören würden.

Gemäß einer speziellen Konstruktion werden die Abluftkanäle, in denen die Abluft gereinigt wird, nicht nur von oben her benetzt, sondern auch von unten, indem an wenigstens einem der Wäscherabschnitte unterhalb des Wäscherabschnitts Wasseraustrittdüsen angeordnet sind, die eine Spritzrichtung nach oben in die Unterseite des Wäscherabschnitts haben. Hierdurch wird vermieden, daß im unteren Teil der Abluftkanäle das von oben durchlaufende Wasser Rinnsale bildet, zwischen denen die Wand trocken bleibt und somit nichts zur Reinigung beiträgt.

Sowohl der Gegenstromwärmetauscher als auch der Abluftwäscher können über das gemeinsame Bauteil hinaus weitere Abschnitte umfassen, die nur die jeweilige Funktion erfüllen. Dies ist besonders sinnvoll für den Abluftwäscher, durch den im Sommerbetrieb große Mengen von Abluft hindurchgeleitet werden, während andererseits die Wärmetauschfunktion nur eine untergeordnete oder gar keine Rolle spielt. Es ist dann sinnvoll, weitere Abluftwäscherabschnitte selektiv zuzuschalten, die keine Wärmetauscherfunktion haben. Im gemeinsamen Bauteil können dann die Querschnitte für die Zuluft und die Abluft gleich sein, wie es bei reinen Wärmetauschern üblich ist.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: eine schematische, teilweise geschnittene Seitenansicht eines biologischen Abluftwäschers, der integral mit einem Gegenstromwärmetauscher kombiniert ist, nach Einbau in einen Viehstall;
- Fig. 2: einen schematischen Querschnitt durch die Abluft-Wärmetauscher-Einheit von Fig. 1 in einer einfachen Ausführung;
- Fig. 3 bis Fig.5: Teilquerschnitte durch im Vergleich zu Fig. 2 abgewandelten Einheiten;
- Fig. 6 und Fig. 7: perspektivische Ansichten der Kanäle der Abluftwäscher-Wärmetauscher-Einheit;
- Fig. 8: eine Anlage entsprechend Fig. 1 mit erweiterter Abluftwäscherkapazität.

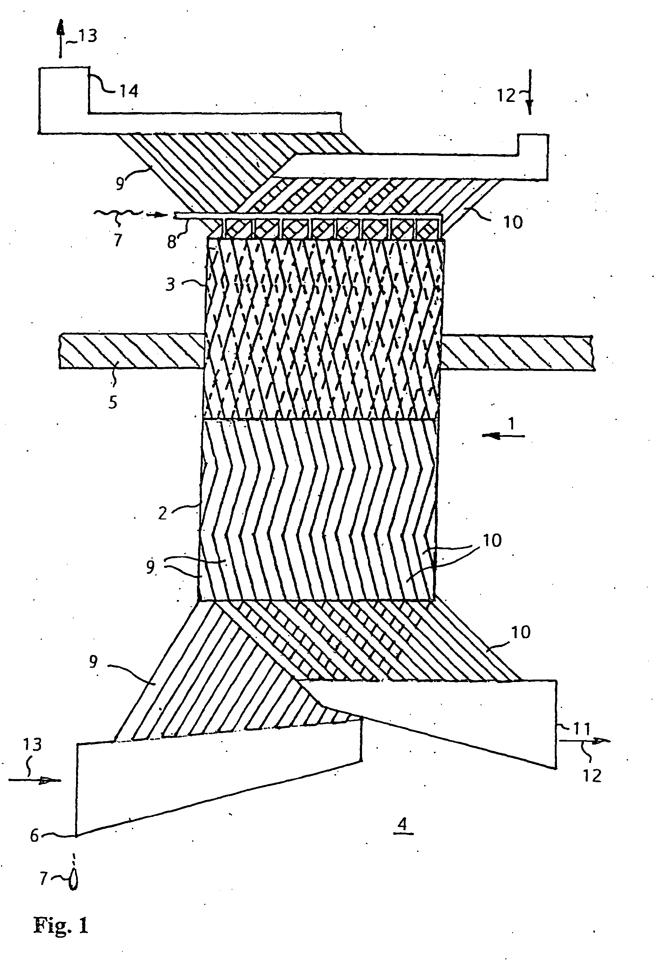

Gemäß Fig. 1 ist eine Wäscher-Tauscher-Einheit 1, die die Funktionen eines Abluftwäschers und eines Gegenstrom-Wärmetauschers kombiniert und die aus zwei in einer Reinigungskammer in Kaskade angeordneten Abschnitten 2 und 3 besteht, in einem Stall 4 oder einem Abluftsammelkanal eingebaut und durchdringt dort die Stalldecke 5 bzw. die Abluftkanaldekke. Unterhalb der Kammer bzw. der Abschnitte 2 und 3 befindet sich eine Wasser-Ablaufinstallation 6, die das aus dem unteren Abschnitt 2 abtropfende, als Tropfen dargestellte Waschwasser 7 sammelt und einem (nicht dargestellten) Sammelbecken zuleitet, von dem aus das Waschwasser wieder zu einem Wasserzulauf 8 gepumpt wird, der oberhalb der Wäscher-Tauscher-Einheit 1 angeordnet ist und das Waschwasser wieder in diese einleitet. Die Wäscher-Tauscher-Einheit 1 besteht aus gegenläufig luftdurchströmten Abluftkanälen 9 und Zuluftkanälen 10, die Wand an Wand aneinanderliegen und einen Wärmeaustauch von den Abluftkanälen 9 zu den Zuluftkanälen 10 ermöglichen. Die Zuluftkanäle 10 werden in einer Zuluftmündung 11, die in den Stall 4 mündet, gesammelt. Die Zuluft ist in Form von Pfeilen eingezeichnet und mit 12 bezeichnet. Das Waschwasser 7 wird von oben in die Abluftkanäle 9 eingegeben und bewirkt in diesen Kanälen eine Reinigung, nämlich Entstaubung und Desodorierung der mit 13 bezeichneten Abluft.

Die baulichen Einzelheiten der Wäscher-Tauscher-Einheit 1 sind, soweit sie dem Stand der Technik entsprechen, hier nicht im einzelnen beschrieben und in der Zeichnung nicht im einzelnen gezeigt, beispielsweise Waschwasserpumpen, die das Waschwasser 7 aus dem Sammelbecken zum Wasserzulauf 8 pumpen, und eine Schlamm-Abpumpvorrichtung, die angesammelten Schlamm aus dem Sammelbecken in die Güllegrube abtransportiert. Desgleichen ist nicht dargestellt, wie die Luft durch den Abluftwäscher und den Wärmetauscher der Einheit 1 gedrückt wird, sei es durch Absaugung in den Abluftkanälen 9 (Unterdrucklüftung) oder durch Verdichter in den Zuluftkanälen 10 (Überdrucklüftung). Die Abluft 13 wird in die Unterseite der Einheit 1 eingesaugt und durchsetzt die Abschnitte 2 und 3, die vom Wasserzulauf 8 von oben her mit Wasser versorgt werden. Sie gibt hierbei Wärme an die Zuluft in den Kanälen 10 ab und verläßt die Einheit 1 schließlich über einen Kamin 14.

An jedem der Abschnitte 2 und 3 stellt sich für die Abluft eine Druckdifferenz als Anteil der vom (nicht dargestellten) Verdichter aufgebrachten Gesamt-Druckdifferenz ein. Diese Druckdifferenz hängt davon ab, wie leicht und geradlinig, oder wie eng und häufig umgeleitet das Gas durch den einzelnen Abschnitt hindurchgeleitet wird. Von diesen Eigenschaften hängt es ab, wie stark Festkörper von den nassen Oberflächen im Abluftwäscher festgehalten und abzufilternde Gase adsorbiert werden, und wie leicht eingefangene Festkörper wieder ausgespült werden. Der Abschnitt 2 ist für einen glatteren, reibungsärmeren Luftdurchsatz konzipiert, was zu einem erleichterten Ausspülen und Abfließen der Festkörper führt, ohne daß sich Schlammnester bilden. Im Gegensatz hierzu hat der Abschnitt 3 eine feinere Durchflußstruktur, mit der Folge eines erhöhten Druckabfalls und eines längeren Verweilens der Abluft in den Gängen dieser Kammer, was zu einer ausreichenden Ausfilterung schädlicher Gase führt, während die grundsätzlich zu befürchtende Festsetzung mitgeführter Festkörperteilchen keine wesentliche Rolle mehr spielt, da diese bereits im Abschnitt 2 ausgewaschen worden sind. Die Abschnitte 2 und 3 können aber auch die gleiche Struktur aufweisen.

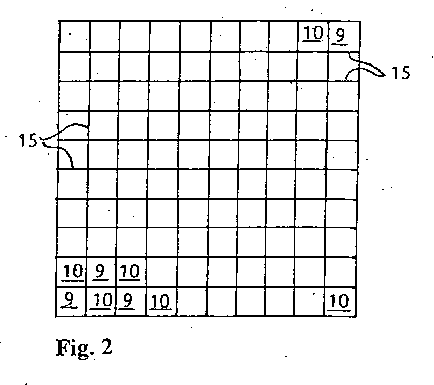

Fig. 2 veranschaulicht das Prinzip des Gegenstromwärmetauschers, bei dem die gegenläufig durchströmten Kanäle, nämlich die Abluftkanäle 9 und die Zuluftkanäle 10, die durch gasdichte Trennwände 15 begrenzt sind, einander in der Anordnung so abwechseln, daß ein Wärmeübergang durch die jeweiligen Trennwände 15 hindurch von den Abluftkanälen 9 zu den Zuluftkanälen 10 erfolgt. Die Abluftkanäle 9 sind zugleich die Abluft-Reinigungskanäle, an deren Wänden sich ein biologischer Rasen gebildet hat, der ständig feucht gehalten wird und Staub und verschiedene Gase aus der Abluft 13 abfiltert. Nach Fig. 2 hat die Wäscher-Tauscher-Einheit einen Schachbrett-Querschnitt: Die Kanäle sind hier quadratisch mit einem Querschnittsverhältnis von 1 : 1 dargestellt.

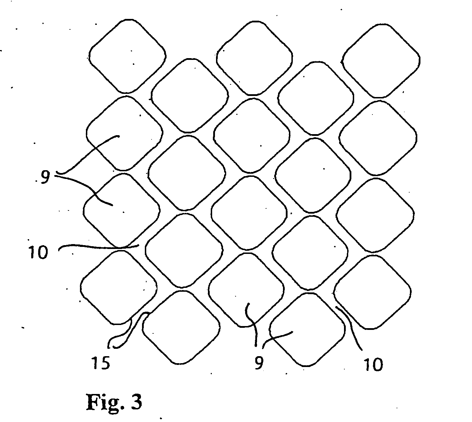

Fig. 3 zeigt eine andere Kanalanordnung, wobei wiederum ähnlich wie nach Fig. 2 die Querschnitte der Abluftkanäle 9 im wesentlichen quadratisch sind, hier allerdings mit abgerundeten Ecken. Die abgerundeten Eckkanten der Abluftkanäle 9 erschweren dort das Festsetzen von Feststoffresten, die in der Abluft enthalten waren, und erleichtern somit das Auswaschen der Kanäle. Die Abluftkanäle 9 haben einen gegenseitigen Abstand, und die Zwischenräume zwischen den Wänden 15 der über das Volumen verteilten Abluftkanäle 9 bilden den Zuluftkanal 10. Hinsichtlich der Anordnung der Querschnitte, insbesondere - wie in Fig. 3 dargestellt - mit sich parallel gegenüberliegenden Quadratseiten, mit sich gegenüberliegenden Quadratecken oder mit einer zwischen diesen Schemen liegenden Anordnung, hat der Fachmann eine breite Wahlmöglichkeit.

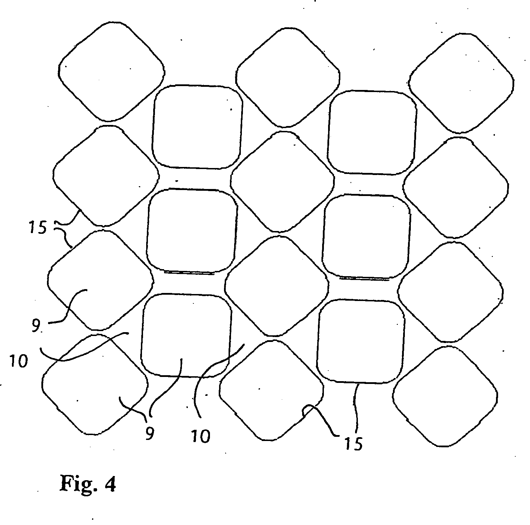

Fig. 4 veranschaulicht gewendelte Kanäle. In der Schnittdarstellung ist die Wendelung dadurch erkennbar, daß von den in Längs- oder Querreihen angeordneten Abluftkanälen 9 jede zweite Reihe in einer ersten bzw. in einer zweiten Wendelrotationsstellung dargestellt ist. Die Wendelung der Kanäle verbessert, wie an sich bekannt ist, den Wärmetauscheffekt.

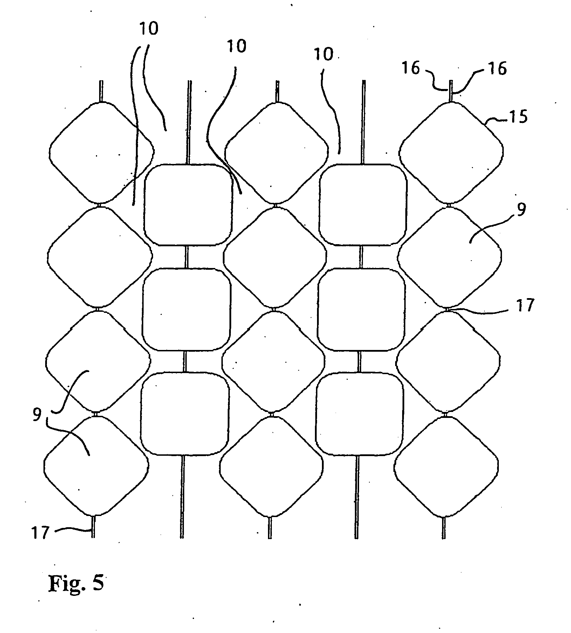

Fig. 5 zeigt in einer Schnittdarstellung ähnlich den Figuren 3 und 4 eine zweckmäßige Konstruktion der Kanäle der Wäscher-Tauscher-Einheit 1, nämlich aus Profilplatten 16, die bei passender Aneinanderlage die Wände 15 der Abluftkanäle 9 sowie dazwischenliegende Stege 17 bilden. Die Zuluftkanäle 10 sind bei dieser Ausführung durch die Stege 17 in streifenförmige Bereiche unterteilt. Die Profilplatten 16 können so gestaltet sein, daß die Abluftkanäle gerade verlaufen, oder auch so, daß die Abluftkanäle gewendelt verlaufen. Die Wendelung erfolgt zweckmäßigerweise so, daß der gerade Abstand zwischen gegenüberliegenden Teilen der Wände 15 konstant bleibt, die Querschnittslinien der gegenüberliegenden Wände also parallel verlaufen.

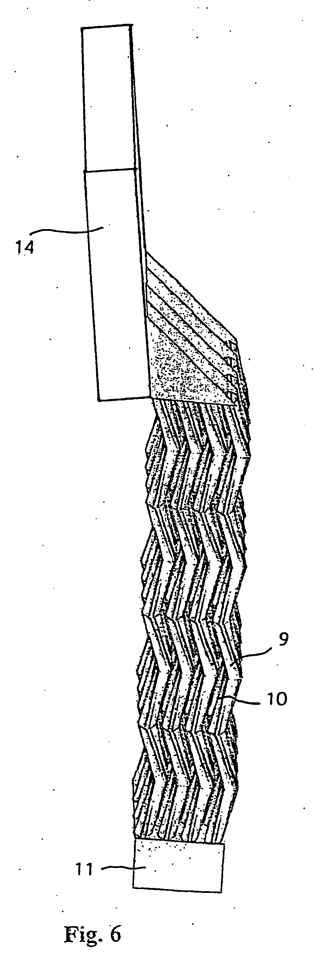

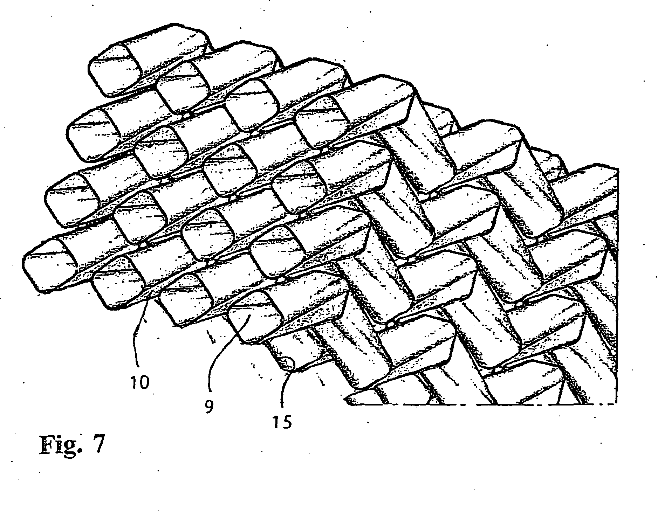

Die Figuren 6 und 7 veranschaulichen anhand perspektivischer Darstellungen Abluftkanäle 9, die sowohl gewendelt sind als auch im Zickzack verlaufen. Die Wärmetauschfunktion ist hierdurch optimiert. Fig. 6 veranschaulicht auch einerseits die Zuluftmündung 11 und andererseits die Abluftableitung am oberen Ende der Abluftkanäle 9 zum Kamin 14 hin. Aufgrund der über die Unterseite und Oberseite verteilten Ansaugung bzw. Abgabe der Abluft und der Zuluft muß jeweils einer dieser Luftströme gefaßt und aus dem Bereich des anderen Luftstroms herausgeführt werden.

Die Abluftkanäle 9 weisen in an sich bekannter, hier nicht dargestellter Weise (DE 4112983 C2) innenseitige Profilierungen auf, die die Wandinnenfläche vergrößern und außerdem zu einer Verwirbelung der Luftströmung führen, so daß die Abluft vielfachen Wandkontakt bekommt.

In üblicher Weise durchströmt die gesamte Abluft den Abluftwäscher und somit bei den dargestellten Ausführungen die Wäscher-Tauscher-Einheit, während beim Stand der Technik im Sommerbetrieb der Wärmetauscher umgangen wird. Das Verhältnis der Kanäle 9 und 10 zueinander ist zweckmäßigerweise so bestimmt, daß für den Wärmetauscher die doppelte Winterdurchsatzrate möglich ist, während die Abluftkanäle 9 für die volle Sommerrate dimensioniert sind.

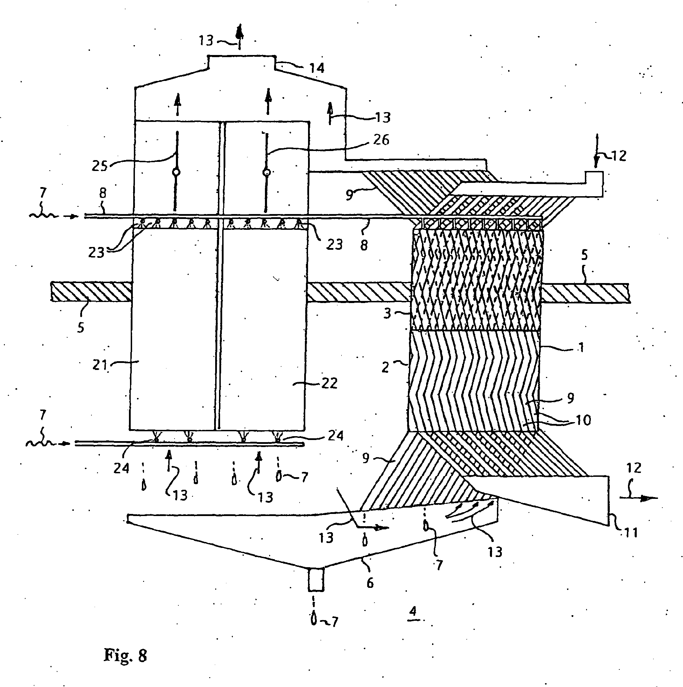

Fig. 8 veranschaulicht in schematischer, der Fig. 1 vergleichbarer Darstellung einen Abluftwäscher, bei dem der Wäscher-Tauscher-Einheit 1 zwei Abluftwäschereinheiten 21 und 22 parallelgeschaltet sind. Diese Abluftwäschereinheiten sind in der Figur nicht geschnitten nur als Block dargestellt, sie können in für Abluftwäscher bekannter Weise jeweils aus einem oder mehreren Abschnitten bestehen, mit Füllkörpern gefüllt sein oder Abluftkanäle aufweisen usw. Die Abluftwäschereinheiten 21 und 22 können über obere Düsen 23 und bei der dargestellten Ausführung außerdem über untere Düsen 24 mit dem Waschwasser 7 versorgt werden, wobei die unteren Düsen 24 den Wascheffekt dadurch verbessern, daß sie im unteren Teil der Wäschereinheiten, in denen das oben eingeleitete Waschwasser dazu neigt, Rinnsale zu bilden und dazwischen trockene Flächen zu belassen, eine gleichmäßige Benetzung der gesamten Wäscherfläche sicherstellen.

Die Abluftwäschereinheiten 21 und 22 sind separat zu- oder abschaltbar, und zwar mit Hilfe jeweiliger Sperrklappen 25 bzw. 26, die auf Durchlaß, auf Sperrung oder in einer Zwischenstellung auch auf gedrosselten Durchlaß einstellbar sind. Die Abluftwäschereinheiten 21 und 22 enthalten keine Zuluftkanäle und erfüllen somit keine Wärmetauscherfunktion. Sie erlauben jedoch die Reinigung eines erhöhten Anfalls an Abluft, wie er im Sommerbetrieb auftritt. Im Sommerbetrieb wird die entsprechende Menge an Zuluft großenteils über andere Stallöffnungen als die Zuluftkanäle 10 zugeführt und auch eine entsprechende Menge an Abluft 13 abgeführt, ohne daß durch diese die Zuluft angewärmt werden müßte. Die erheblichen Unterschiede des Luftdurchsatzes im Sommerbetrieb einerseits und im Winterbetrieb andererseits können mit einer solchen Anlage mit mehreren parallel geschalteten Einheiten in zweckmäßiger Weise beherrscht werden.

## Patentansprüche

1. Bio-Abluftwäscher für einen Tierstall (4), mit wenigstens einem Wäscherabschnitt (2,3), in dem von der Abluft (13) durchströmbare, einen aufwärtsweisenden Verlauf habende Abluftkanäle (9) angeordnet sind, über denen sich eine Wasserzuführung (8) und wenigstens ein Abluftausgang (14) befinden und unter denen sich eine Wassersammelinstallation (6), die zur Durchführung eines Wasserkreislaufs über eine Pumpeinrichtung mit der oberhalb der Abluftkanäle (9) befindlichen Wasserzuführung (8) verbunden ist, und wenigstens ein Ablufteingang befinden und die innenseitig eine oberflächenvergrößernde Profilierung aufweisen, auf der ein biologischer Rasen gebildet ist, der durch das abwärtsfließende Wasser benetzbar ist, wobei im Strömungsweg von mindestens einem Teil der Abluft (13) ein Gegenstromwärmetauscher (9+10) angeordnet ist, der von den Abluftkanälen (9) strömungsmäßig getrennte Zuluftkanäle (10) umfaßt, die die Abluftkanäle (9) über eine jeweils dazwischenliegende gemeinsame Trennwand berühren, **dadurch gekennzeichnet, daß** der wenigstens eine Wäscherabschnitt und wenigstens ein Abschnitt des Gegenstromwärmetauschers in integrierter Weise ein gemeinsames Bauteil (1,2,3) bilden.

2. Abluftwäscher nach Anspruch 1, **dadurch gekennzeichnet, daß** eine der beiden Arten von Kanälen - Zuluftkanal (10) oder Abluftkanal (9) - aus seitlich geschlossenen Kanalleitungen besteht und die andere Art der Kanäle aus den Zwischenräumen zwischen den Kanalleitungen besteht.

3. Abluftwäscher nach Anspruch 1 oder 2, **dadurch gekennzeichnet, daß** die Summe der Querschnitte der Abluftkanäle (9) zur Summe der Querschnitte der Zuluftkanäle (10) in einem Verhältnis steht, das im Bereich von 7 : 1 bis 3 : 1 liegt.

4. Abluftwäscher nach Anspruch 3, **dadurch gekennzeichnet, daß** das Verhältnis im Bereich 6 : 1 bis 4 : 1 liegt.

5. Abluftwäscher nach einem der Ansprüche 1 bis 4, **dadurch gekennzeichnet, daß** die Abluftkanäle (9) einen Zickzack-Verlauf haben.

6. Abluftwäscher nach einem der Ansprüche 1 bis 5, **dadurch gekennzeichnet, daß** die Abluftkanäle (9) einen polygonalen Querschnitt haben und die Eckkanten der Abluftkanäle zumindest streckenweise eine um die Kanallängsachse umlaufende Verlaufskomponente haben.

7. Abluftwäscher nach einem der Ansprüche 1 bis 6, **dadurch gekennzeichnet, daß** die Kanäle (9,10) aus Profilplatten bestehen, die parallel zueinander in im wesentlichen vertikaler Positionierung aneinanderliegend gehalten sind und deren Profile schräg abwärtslaufende Rinnen bilden.

8. Abluftwäscher nach Anspruch 2 oder einem der auf Anspruch 2 rückbezogenen Ansprüche 3 bis 7, **dadurch gekennzeichnet, daß,** wenn die Abluftkanäle (9) aus den geschlossenen Kanalleitungen bestehen, die Wassersammelinstallation (6) aus einem Kanalsystem besteht, das an jedem der unteren Enden der Abluftkanäle (9) mit einer Zweigleitung angeschlossen ist.

9. Abluftwäscher nach einem der Ansprüche 1 bis 8, **dadurch gekennzeichnet, daß** an wenigstens einem der Wäscherabschnitte (21, 22) unterhalb des Wäscherabschnitts Wasseraustrittsdüsen (24) angeordnet sind, die eine Spritzrichtung nach oben in die Unterseite des Wäscherabschnitts haben.

10. Abluftwäscher nach einem der Ansprüche 1 bis 9, **dadurch gekennzeichnet, daß** außer einem oder mehreren jeweils gemeinsam den Wäscherabschnitt und den Gegenstromwärmetauscher umfassenden Bauteil(en) (1) noch ein oder mehrere von parallelen Abluftströmen durchsetzbare Wäscherabschnitte (21, 22) vorhanden sind, die mit verstellbaren Sperrvorrichtungen (25, 26) zum wahlweisen Sperren oder Durchlassen des Abluftstroms (13) versehen sind.

11. Abluftwäscher nach Anspruch 10, **dadurch gekennzeichnet, daß** die Sperrvorrichtungen (25, 26) auch Zwischenstellungen für ein gedrosseltes Durchlassen des Abluftstroms (13) zulassen.

12. Abluftwäscher nach Anspruch 10 oder 11, **dadurch gekennzeichnet, daß** das bzw. die jeweils gemeinsam den Wäscherabschnitt und den Gegenstromwärmetauscher umfassende(n) Bauteil(e) (1) ein Verhältnis der Summe der Querschnitte der Abluftkanäle (9) zur Summe der Querschnitte der Zuluftkanäle (10) von 1 : 1 hat/haben.

## Claims

1. A biological exhaust air scrubber for an animal stable (4) with at least one scrubber section (2, 3) in which exhaust air ducts (9) are arranged through which the exhaust air (13) can flow and which have an upwardly directed course, above which at least one water supply member (8) and at least one exhaust air discharge (14) are located, and underneath which, a water collecting installation (6) connected via a pump device with the water supply member (8) located above the exhaust air ducts (9) for generating a water circulation and at least one exhaust air inlet are located, and which have on the inner side a surface-enlarging profile on which a microbial film is formed which can be wetted by down-flowing water, wherein within the flow path of at least a portion of the exhaust air (13), a counterflow heat exchanger (9 + 10) is arranged which comprises supply air ducts (10) separated from the exhaust air ducts (9) with respect to the flow, which supply air ducts touch the exhaust air ducts (9) via a common partition wall located between each of them, **characterized in that** the at least one scrubber section and at least one section of the counterflow heat exchanger form in an integrated manner a single component (1, 2, 3).

2. The exhaust air scrubber according to claim 1, **characterized in that** one of the two types of ducts - supply air duct (10) or exhaust air duct (9) - consists of laterally closed duct lines, and the other type of ducts consists of the intermediate space between the duct lines.

3. The exhaust air scrubber according to claim 1 or claim 2, **characterized in that** the ratio of the sum of the cross sections of the exhaust air ducts (9) to the sum of the cross sections of the supply air ducts (10) is in the range of 7 : 1 to 3 : 1.

4. The exhaust air scrubber according to claim 3, **characterized in that** the ratio is in the range 6 : 1 to 4 : 1.

5. The exhaust air scrubber according to any one of the claims 1 to 4, **characterized in that** the exhaust air ducts (9) have a zigzag course.

6. The exhaust air scrubber according to any one of the claims 1 to 5, **characterized in that** the exhaust air ducts (9) have a polygonal cross section and the edges of the exhaust air ducts have, at least in sections, a course that runs with a circumferential component about the longitudinal duct axis.

7. The exhaust air scrubber according to any one of the claims 1 to 6, **characterized in that** the ducts (9, 10) consist of profiled plates which are parallel and kept together abutting in a substantially vertical position and the profiles of which form flutes which extend downwards at an angle.

8. The exhaust air scrubber according to claim 2 or any one of the claims 3 to 7 related to claim 2, **characterized in that**, when the exhaust air ducts (9) consist of the closed duct lines, the water collecting installation (6) consists of a duct system which is connected by means of a branch line to each of the lower ends of the exhaust air ducts (9).

9. The exhaust air scrubber according to any one of the claims 1 to 8, **characterized in that** at least at one of the scrubber sections (21, 22), water outlet nozzles (24) are arranged below the scrubber section which have a spraying direction pointing upwards into the bottom side of the scrubber section.

10. The exhaust air scrubber according to any one of the claims 1 to 9, **characterized in that** besides one or more components (1) each jointly comprising the scrubber section and the counterflow heat exchanger, in addition, one or more scrubber sections (21, 22) are present which can be penetrated by parallel exhaust air flows and which are provided with adjustable shut-off devices (25, 26) to selectively block the exhaust air flow (13) or to let it pass.

11. The exhaust air scrubber according to claim 10, **characterized in that** the shut-off devices (25, 26) also allow intermediate positions for a reduced passage of the exhaust air flow (13).

12. The exhaust air scrubber according to claim 10 or claim 11, **characterized in that** (each of) the component(s) (1) jointly comprising the scrubber section and the counterflow heat exchanger has a ratio of the sum of the cross sections of the exhaust air ducts (9) to the sum of the cross sections of the supply air ducts (10) of 1 : 1.

## Revendications

1. Laveur d'air vicié pour une écurie (4), avec au moins un tronçon laveur (2, 3), dans lequel sont disposés des canaux à air vicié (9), ayant une allure tournée vers le haut, susceptibles d'être parcourus par un écoulement d'air vicié (13), canaux au-dessus desquels se trouve une amenée d'eau (8) et au moins une sortie d'air vicié (14), et au-dessous desquels se trouvent une installation de collecte d'eau (6), reliée à l'amenée d'eau (8) se trouvant au-dessus des canaux à air vicié (9), par l'intermédiaire d'un dispositif de pompage, pour constituer un circuit à eau, et au moins une entrée d'air vicié, et les canaux à air vicié présentant intérieurement un profilage, augmentant l'aire de la surface, sur lequel est formé un gazon biologique, susceptible d'être mouillé par l'eau s'écoulant vers l'aval, dans le chemin suivi par l'écoulement d'au moins une partie de l'air vicié (13) étant disposé un échangeur de chaleur à contre-courant (9+10), comprenant des canaux d'amenée d'air (10), séparés, en termes d'écoulement, des canaux à air vicié (9), les canaux d'amenée d'air (10) étant mis en contact avec les canaux à air vicié (9) par l'intermédiaire d'une paroi de séparation commune, chaque fois interposée, **caractérisé en ce que** le au moins un tronçon laveur et au moins un tronçon de l'échangeur de chaleur à contre-courant forment, de manière intégrée, un composant (1, 2, 3) commun.

2. Laveur d'air vicié selon la revendication 1, **caractérisé en ce que** l'un des deux types de canaux - canal d'amenée d'air (10) ou canal à air vicié (9) - est composé de conduites de canalisation fermées latéralement, et l'autre type des canaux est composé des espaces intermédiaires entre les conduites de canalisation.

3. Laveur d'air vicié selon la revendication 1 ou 2, **caractérisé en ce que** la somme des aires des sections transversale des canaux à air vicié (9) est, par rapport à la somme des aires des canaux d'amenée d'air (10), dans un rapport situé dans la fourchette de 7:1 à 3:1.

4. Laveur d'air vicié selon la revendication 3, **caractérisé en ce que** le rapport est situé dans la fourchette de 6:1 à 4:1.

5. Laveur d'air vicié selon l'une des revendications 1 à 4, **caractérisé en ce que** les canaux à air vicié (9) ont une allure en zigzag.

6. Laveur d'air vicié selon l'une des revendications 1 à 5, **caractérisé en ce que** les canaux à air vicié (9) ont une section transversale polygonale et les arêtes d'angle des canaux à air vicié ont, au moins par tronçons, une composante d'allure tournant autour de l'axe longitudinal de canal.

7. Laveur d'air vicié selon l'une des revendications 1 à 6, **caractérisé en ce que** les canaux (9, 10) sont composés de plaques profilées, maintenues en appui les unes sur les autres, parallèlement entre elles, en un positionnement sensiblement vertical, et dont les profils forment des goulottes allant en descendant obliquement.

8. Laveur d'air vicié selon la revendication 2 ou l'une des revendications 3 à 7 se référant à la revendication 2, **caractérisé en ce que**, lorsque les canaux à air vicié (9) sont composés des conduites de canalisation fermées, l'installation de collecte d'eau (9) est composée d'une système de canalisation raccordé à chacune des extrémités inférieures des canaux à air vicié (9) avec une conduite de dérivation.

9. Laveur d'air vicié selon l'une des revendications 1 à 8, **caractérisé en ce que**, en au moins l'un des tronçons laveurs (21, 22), au-dessous du tronçon laveur sont disposés des buses de sortie d'eau (24) ayant une direction de pulvérisation orientée vers le haut, dans la face intérieure du tronçon laveur.

10. Laveur d'air vicié selon l'une des revendications 1 à 9, **caractérisé en ce que**, hormis un ou plusieurs composant(s) (1), ayant chaque fois en commun le tronçon laveur et l'échangeur de chaleur à contre-courant, sont prévus encore un ou plusieurs tronçons laveurs (21, 22) susceptibles d'êtres parcourus par des écoulements parallèles d'air vicié, munis de dispositifs d'isolement (25, 26) réglables, pour, au choix, isoler ou laisser passer l'écoulement d'air vicié (13).

11. Laveur d'air vicié selon la revendication 10, **caractérisé en ce que** les dispositifs d'isolement (25, 26) permettent également des positions intermédiaires pour un passage étranglé de l'écoulement d'air vicié (13).

12. Laveur d'air vicié selon la revendication 10 ou 11, **caractérisé en ce que** le ou les composant(s) (1), ayant chaque fois en commun le tronçon laveur et l'échangeur de chaleur à contre-courant, a/ont un rapport de la somme des aires des sections transversale des canaux à air vicié (9), par rapport à la somme des aires des canaux d'amenée d'air (10), de 1:1.
